Europäisches Patentamt

European Patent Office

Office européen des brevets

(11) Publication number: **0 311 112**
**A2**

# EUROPEAN PATENT APPLICATION

(21) Application number: 88116675.5

(22) Date of filing: 07.10.88

(51) Int. Cl.⁴: **E05B 49/00**

(30) Priority: 07.10.87 JP 253022/87
01.07.88 JP 165269/88

(43) Date of publication of application:
**12.04.89 Bulletin 89/15**

(84) Designated Contracting States:
**DE FR GB**

(71) Applicant: **MATSUSHIMA KOGYO KABUSHIKI KAISHA**
**3-5, Owa 3-chome**
**Suwa-shi Nagano-ken(JP)**

(72) Inventor: **Yoshizawa, Hirofumi c/o**
**Matsushima Kogyo K.K.**
**Oaza-Nakaminowa 8548 Minowa-machi**
**Kamiina-gun Nagano-ken(JP)**

(74) Representative: **Blumbach Weser Bergen**
**Kramer Zwirner Hoffmann Patentanwälte**
**Radeckestrasse 43**
**D-8000 München 60(DE)**

(54) **Remote control transmitting/receiving system.**

(57) There is disclosed a remote control transmitting/receiving system in which a remote control transmitter (32) and a remote control receiver (33) each have a timer (20, 31); at least part of control signals consist of timer information generated from the timer (20) of the remote control transmitter. When the difference between the timer information of the control signals and the timer information of the timer (31) of the remote control receiver (33)is less than a predetermined first reference value, the remote control receiver can be controlled. This system includes means for giving an alarm when the difference between said pieces of timer information comes to a predetermined second reference value which is lower than said first reference value. The remote control transmitter and receiver have means for outputting and varying the timer information and means for setting an initial value of the timer. The receiver has means for setting a fixed code. Control signals of the transmitter are ciphered by ciphering means, and the ciphered signals are in turn deciphered by deciphering means. In this arrangement, the privacy can be protected from a copy remote controller, and the security can also be ensured.

Fig. 3(a)

## REMOTE CONTROL TRANSMITTING/RECEIVING SYSTEM

### BACKGROUND OF THE INVENTION:

#### Field of the Invention:

The present invention relates to a remote control transmitting/receiving system suited to electric and electronic appliances and electronic locks or the like and, more particularly, to the protection of privacy and security in such a system.

#### Description of the Prior Art:

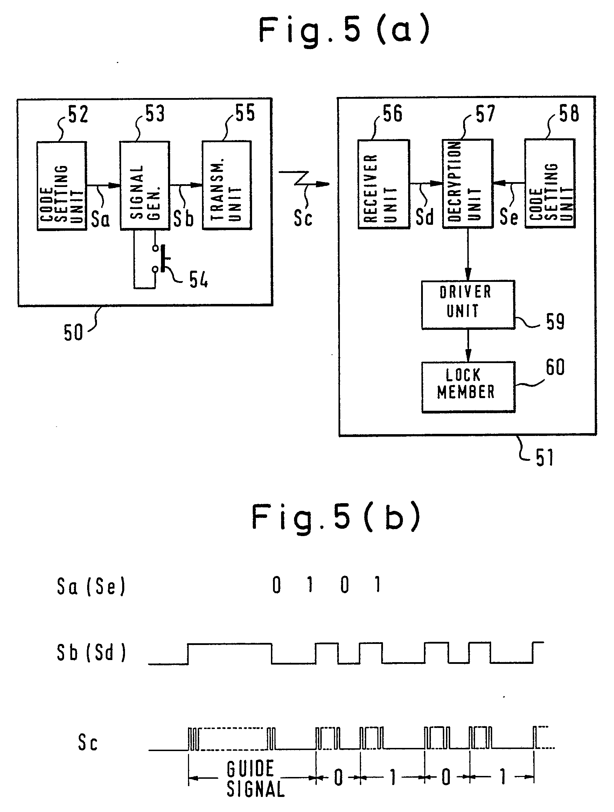

First, a conventional control system for controlling a remote control device will be described by exemplifying a remote control key and lock. Referring to the block diagram of FIG. 5(a) and the waveform diagram of FIG. 5(b), when pushing a start switch 54 of a remote control transmitter (remote control key device) 50, a code Sa from a code setting unit 52 is converted into serial data Sb by means of a signal generating unit 53. Subsequently, remote control transmitting data Sc is transmitted by a transmitting unit 55 with infrared rays serving as a signal carrier medium. A guide signal having a constant pulse width for picking up the head is followed by a setting code Sa of "0101" in this example. The guide signal and the setting code Sa are PPM-modulated at a carrier frequency of 38 kHz, thus forming a remote control signal Sc which will be transmitted as an infrared ray of light. The infrared remote control signal is received by a receiving unit 56 of a remote control receiver (remote control lock device) 51 and is converted into serial data Sd. The thus converted serial data Sd is decrypted by a signal decryption unit 57. When the decrypted signal coincides with the code Se from the code setting unit 58, a lock member 60 is opened and closed by a driver member 59. If not, no opening and closing operation is performed. The code Sa, Se is previously set in the code setting units 52 and 58 of the remote control transmitter and receiver. The code differs depending on the respective remote control locks, whereby security is maintained.

In recent years, individual homes have a wide variety of remote control transmitters on account of a spread of remote control devices. Complicated usage of the remote control transmitter leads to a situation where a so-called copy remote controller is put into market. This copy remote controller is so constructed that a single remote control transmitter is capable of controlling several remote control receivers by learning the infrared control signal of several kinds of remote control transmitters. Under such circumstances, it is difficult to protect the privacy and ensure the security in electric appliances each equipped with a remote control device, remote control locks, cordless telephones, devices for preventing things from being left which are all used exclusively for holders. For the time being, the commercially available copy remote controller has only a function to learn infrared control signals. However, the same problems as the above are also inherent in remote control devices in which an acoustic wave, an electromagnetic wave, a voltage or an electric current is used as the signal medium.

It is a primary object of the present invention to provide a remote control transmitting/receiving system which obviates the above-described problems and is capable of protecting the privacy from a copy remote controller and ensuring the security.

This object is achieved with a system as claimed in claim 1.

Specific embodiments of the invention are claimed in the dependent claims.

The foregoing and other objects, features and advantages of the invention will become more apparent during the following discussion with reference to the accompanying drawings.

### BRIEF DESCRIPTION OF THE DRAWINGS:

FIGS. 1(a) to 1(c) are diagrams each illustrating remote control key and lock devices according to a first embodiment of the present invention; FIG. 1(a) is a block diagram; FIG. 1(b) is a data waveform diagram; FIG. 1(c) is a flowchart;

FIGS. 2(a) to 2(c) are diagrams showing in combination a remote control transmitting/receiving system having a more sophisticated security function according to a second embodiment of the present invention; FIG. 2(a) is a block diagram; FIG. 2(b) is a cipher table; FIG. 2(c) is a waveform diagram;

FIGS. 3(a) to 3(d) are diagrams illustrating in combination a remote control transmitting/receiving system according to a concrete embodiment of the present invention in which a transmitting circuit is incorporated into a wrist watch, while a receiving circuit is incorporated into an electric lock case; FIG. 3(a) is a circuit diagram; FIG. 3(b) is a view illustrating an actual body of the remote control transmitter; FIG. 3(c) is a view illustrating an actual body of the remote control receiver; FIG. 3(d) is a diagram showing a memory;

FIG. 4 is a waveform diagram showing a situation where a control code is added to an ID code; and

FIGS. 5(a) and 5(b) showing remote control key and lock devices of a prior art remote control device; FIG. 5(a) is a block diagram; FIG. 5(b) is a data waveform diagram.

## DETAILED DESCRIPTION OF THE PREFERRED EMBODIMENTS:

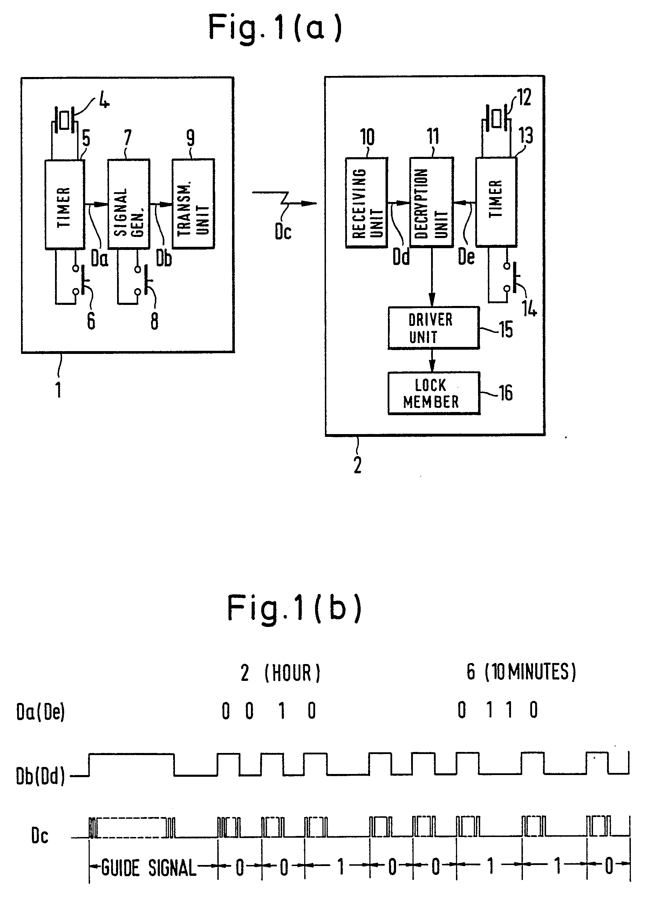

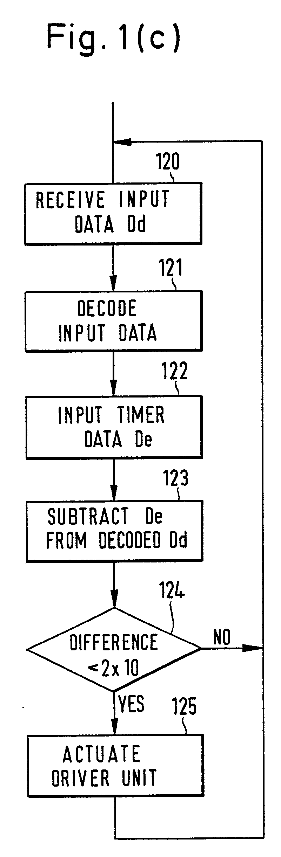

A first embodiment of a remote control transmitting/receiving system according to the present invention will hereinafter be described by exemplifying remote control key and lock devices with reference to FIGS. 1(a) to 1(c).

A remote control transmitter (remote control key device in this example) generally designated at 1 includes a timer unit 5 having a crystal vibrator 4 and a reset switch 6. On turning ON the reset switch 6, the measurement of time is initiated. When pushing a start switch 8, a signal generating unit 7 reads timer data Da of the timer unit 5. Subsequently the timer data Da is converted into serial data Db and is then transmitted to a transmitting unit 9. The transmitting unit 9 serves to modulate a carrier frequency of 38 kHz with the serial data Db, and an infrared-ray signal is transmitted as transmission data Dc. On the other hand, a remote control receiver (remote control lock device in this example) generally indicated at 2 comprises a timer unit 13 including a crystal vibrator 12 having the same frequency as the crystal vibrator 4 of the remote control transmitter 1, and a reset switch 14. When simultaneously turning ON the reset switches 6 and 14 of the transmitter and the receiver, an initial value is set in each of timer units 5 and 13, and it follows that the timer units have timer data which are either the same or have a slight time difference. A receiving unit 10 receives the infrared signal Dc which will then be converted into serial data Dd (its waveform is the same as that of the data Dc). A signal decryption unit 11 decodes the serial data Dd and judges whether the received data coincides with the timer data De on the receiving side or not. If the received data coincides with the timer data De, an ON/OFF signal is outputted, and a lock member 16 is opened and closed by a driver unit 15. The timer units 5 and 13 on the transmitting side and on the receiving side, respectively, have a slight time difference because of a natural frequency difference of the crystal vibrators, an oscillating circuit difference, a temperature difference and/or a reset timing difference. If the received data Dd does not exactly coincide with the timer data De on the receiving side, preferably the following processes are effected. The signal decryption unit 11 composed of a microcomputer deals with the timer data of tens digit of minutes at the maximum. The difference between the received data and the receiver's timer data is obtained in a step 123 in accordance with the flowchart of FIG. 1(c). If the difference falls within a range of 20 minutes in step 124, it is determined that the received data coincides with the timer data. As described above, the operation of the remote control lock depends on the coincidence of transmitted information with the receiver's timer information. Therefore, even if the infrared signal is copied when the remote control transmitting unit is lost or stolen or lent to others, since the copy remote controller has copied a signal including past timer data, and since the timer data is not updated by the copy remote controller the copied infrared signal is useless. The timer data used in this example includes the digits for hour and minute. However, if such units as year, month, day and time are employed, the amount of information increases. The number of remote control lock devices with the same hour of their timer data decreases in terms of probability, thereby improving the security. In this example, concerning the normal accuracy of a quartz chronometer, a monthly time-difference is approximately ± 30 sec. Therefore, it is assumed that a period for use will be approximately 3 years, if the reference value for judging the coincidence of the timer information is approximately ± 20 minutes. If a period for use of the remote control lock is to be extended, the above-mentioned reference value may be increased, or alternatively the time precision of the timer unit may be improved. The timer information has been explained on the basis of ordinarily used time units as hour and minute in this example. The information of the remote control transmitting unit must be identical with that of the remote control receiving unit with a slight difference, so that the frequency of the crystal vibrator may have any value, i.e. the time unit is not necessarily based on hour, minute and second.

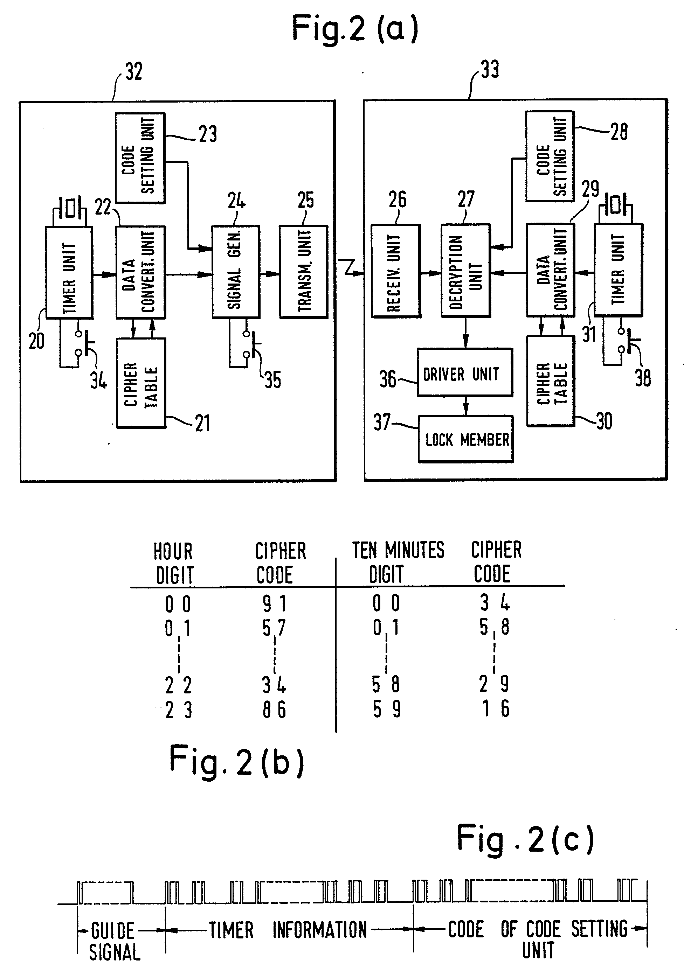

Next, a second embodiment further improving the security will be described with reference to FIGS. 2(a) through 2(c). In the preceding example, the timer information is converted directly into an infrared signal. In this example, however, timer data converting units 22 and 29 serve to read the timer data of timer units 20 and 31 to read a cipher code in referring to cipher tables 21 and 30, and to cipher the timer data in accordance with the cipher code. The thus ciphered data is transmitted via a signal generating unit 24, a transmitting unit 25 and a receiving unit 26 to a signal decryption unit 27. If the cipher tables are the same in the transmitter and the receiver, a way of determination may be based on an arbitrary table depicted in FIG. 2(b) or a cipher table determined by gene rating random numbers. Where the timer information is thus ciphered, the ciphered information can by no means be decrypted by analyzing the infrared signal. As a result, the security can be further ensured. In this embodiment, code setting units 23 and 28 are added, and the timer information and the codes to be set are, as illustrated in the waveform diagram of FIG. 2(c), arranged in series and form the infrared signal. If the timer information of another similar remote control device contingently accords with the timer information of the receiver, they still can be distinguished from each other, and incidental malfunction is thereby eliminated. This code setting device may be of a fixed system or a system in which the user is allowed to arbitrarily set the code. In the case of the user-arbitrary-setting system, the code setting unit 23 of the remote control transmitter 32 serves as a ten-key. The password numbers are so inputted from the ten-key as to become codes of the above described code setting unit. This arrangement prevents the adverse use of the remote control transmitter because of unrecognizable password numbers, even if the remote control transmitter is stolen. Hence the security can be improved. The description given above is focused on a pair of transmitter and receiver. However, where a plurality of specified codes is set in the code setting unit 28 of the receiver, a plurality of users may employ a single remote control lock. This system can be applied for instance to a door lock of a research institute which is accessible to many people but requires maintenance of confidence. Namely, one of a set of password numbers is imparted to each researcher, and the password numbers of all the researchers are registered in the code setting unit on the receiving side. By virtue of this registration, other people than the researchers themselves are unable not only to unlock the door but also to copy the key.

In accordance with this embodiment, the timer information is ciphered, but the codes of the code setting unit may also be ciphered.

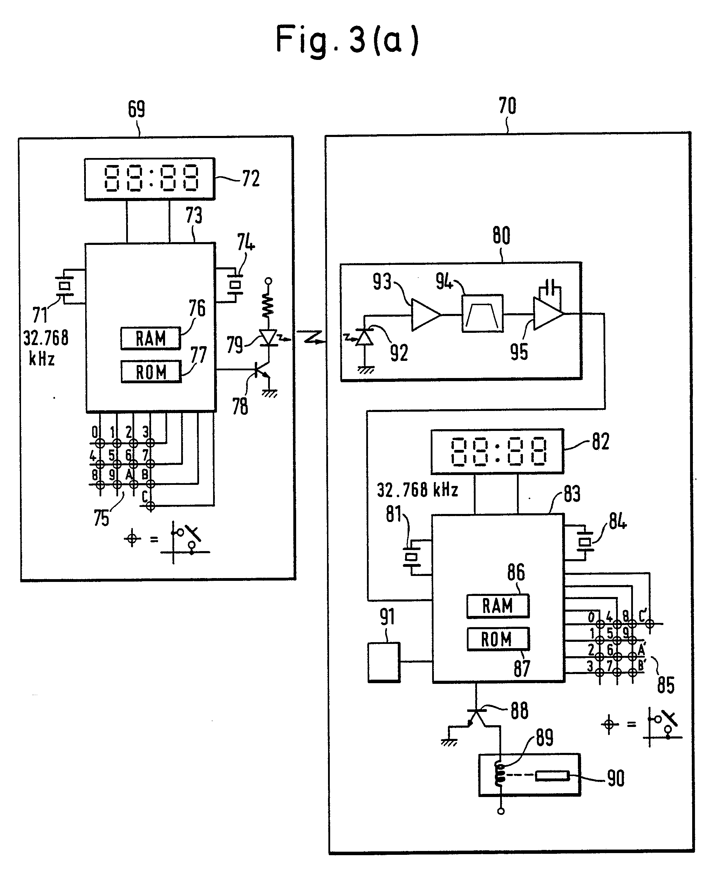

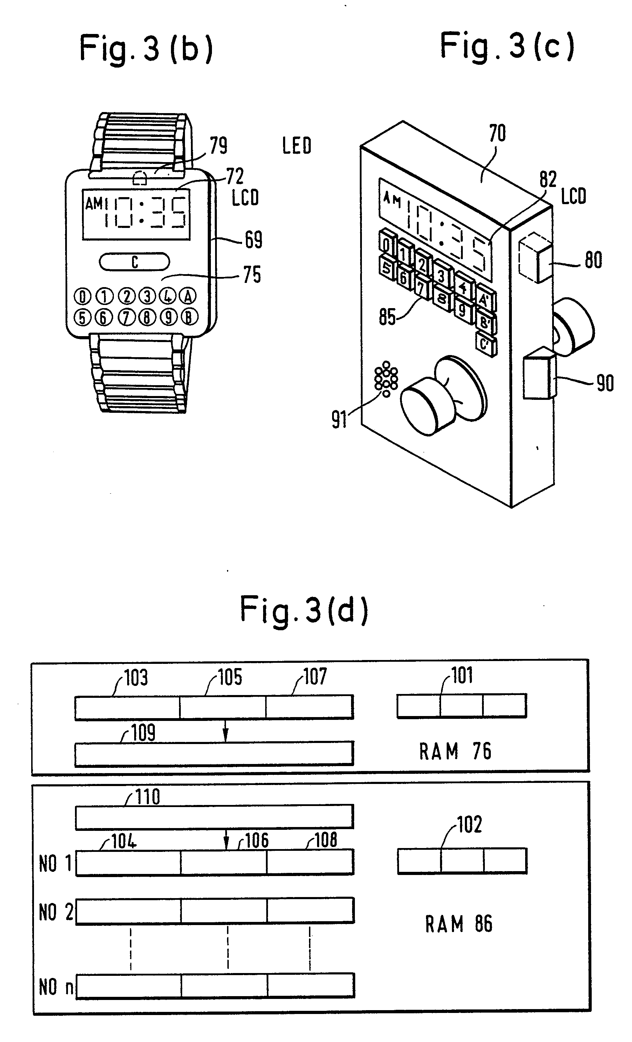

The principle of the present invention has now been described in conjunction with two embodiments. The foregoing second embodiment will now be explained in greater detail with reference to Fig. 3(a) to 3(d) illustrating a concrete embodiment of the invention. The circuit diagram of FIG. 3(a) corresponds to the block diagram of FIG. 2(a). In this concrete embodiment, the transmitting circuit is incorporated into a wrist watch in common with a clock circuit, while the receiving circuit is incorporated into an electric lock case. The component that will first be described is the wrist watch 69 forming the transmitter. The timer unit 20, the cipher table 21, the timer data converting unit 22 and the signal generating unit 24 which are all shown in FIG. 2(a) are built in a microcomputer 73. A code setting unit 23 depicted in FIG. 2(a) consists of a keyboard 75 and a RAM 76 of the microcomputer 73. The transmitting unit 25 depicted in FIG. 2(a) is composed of a 456 kHz ceramic vibrator 74, the microcomputer 73, a transistor 78 and an infrared light emitting diode (LED) 79. A 32.768 kHz crystal vibrator 71 connected to the microcomputer 73 is oscillated and frequency-divided by an oscillation circuit and a frequency dividing circuit, respectively, which are built in the microcomputer 73, thereby generating one-second signals and ten-second signals which will be counted in the RAM 76. Subsequently, a clock counter 101 and a transmitting counter 103 are made to function as a timer unit. The clock counter 101 is composed of an hour-minute-second counter for counting the one-second signals; and, as illustrated in FIG. 3(b), the data thereof are, though there is no correspondence in the preceding embodiment, displayed on an LCD display unit 72 serving as a timer data display unit provided on the upper surface of the wrist watch 69. The transmitting counter 103 consisting of a 20-bit binary counter for counting the ten-second signals is employed as a timer device for signal transmission. Typically, the wrist watch 69 actuates the microcomputer 73 by clocks of 32.768 kHz in order to reduce the consumption of electric power. In the case of code setting, hour modification and signal transmission, high-speed processing is executed by starting a 456 kHz ceramic vibrator. The code setting is performed in the following manner in accordance with a program which will be executed only once immediately after, for instance, a lithium battery (not illustrated) has been inputted as a power source. To start with, random 20-bit data is automatically stored as an initial value in the transmitting counter 103. Next, three keys among keys 0 to 9 of the keyboard 75 are pressed, and the inputted 3-digit (12 bits) data is stored in a fixed code memory 105 depicted in FIG. 3(d). Subsequent to this step, in the same way as that of the input to the fixed code memory 105 3-digit (12 bits) data is stored in a password code memory 107, thereby performing the code setting. The transmitting counter 103 initiates a binary-base time measurement by employing the ten-second signals, with the initial value stored in the transmitting counter 103 serving as an origin. The data in fixed code memory 105 continues to be used as a fixed number of the wrist watch 69 till the lithium battery is inputted once again. The password code memory 107 is a memory intended to transmit the password numbers inputted from the keyboard every time the transmission is executed. After the codes setting has thus been carried out when a function key C of the keyboard 75 is pushed, the data are ciphered on the basis of the cipher table stored in ROM 77, the order of data sets is changed and is stored in the transmitting memory 109. Then, a carrier frequency of 38 kHz obtained by dividing the frequency of 456 kHz of the ceramic vibrator 74 by a factor of 12, is modulated by the data and the thus modulated data signal is transmitted by means of the infrared light emitting diode 79.

An electric lock serving as a receiver will next be explained. The microcomputer 83 depicted in FIG. 3(a) incorporates a timer unit 31, a cipher table 30, a timer data converting unit 29, a signal decryption unit 27 and a code setting unit 28 which are shown in FIG. 2(a). The receiving unit 26 shown in FIG. 2(a) is a light receiving unit 80 consisting of a photodiode 92, an amplifier 93, a band pass filter 94 and an integrator 95 which are illustrated in FIG. 3(a). The driver unit 36 of FIG. 2(a) corresponds to a transistor 88 of FIG. 3(a), while the lock member 37 of FIG. 2(a) corresponds to an electromagnetic solenoid 89 and a lock rod 90 shown in FIG. 3(a). The microcomputer 83 to which a 32.768 kHz crystal vibrator 81 is, as in the case of the microcomputer 73 of the wrist watch 69, connected generates one-second signals and ten-second signals; and a clock counter 102 and a receiving counter 104, which are shown in FIG. 3(d), are formed as part of a RAM 86. The clock counter 102 is composed of an hour-minute-second counter for counting the one-second signals; and the data thereof are, as illustrated in FIG. 3(c), displayed on an LCD display unit 82 from a side surface of an electric lock 70. The receiving counter 104 consisting of a 20-bit binary counter for counting the ten-second signals is used as a timer device for comparison with the received timer data. Generally, the electric lock 70 whose power source is a dry element battery (not shown) is arranged to be used by operating the microcomputer 83 with clocks of 32.768 kHz for the purpose of diminishing the consumption of electric power. A high-speed processing is effected by starting the 456 kHz ceramic vibrator 84 at the time of code setting, hour modification and receiving process. The code setting with respect to the electric lock 70 involves the steps of first pushing a function key C' of the keyboard 85; secondly transferring the data by pushing a function key C of the wrist watch keyboard while directing the infrared light emitting diode 79 of the code-registered wrist watch 69 to a light receiving unit 80; and finally inputting the transferred data to the RAM 86 of the microcomputer 83. To be more specific, the data of the transmitting memory 109 are transmitted in the form of waveforms depicted in FIG. 2(c) in the second embodiment and are received by the light receiving unit 80. The thus received data are stored in a receiving memory 110 of FIG. 3(d). The data of the receiving memory 110 are deciphered in accordance with the cipher table of the ROM 87. The order of data sets is rearranged; the data of the transmitting counter 103 are stored in the receiving counter 104; the data of the fixed code memory 105 are stored in the fixed code memory 106; and the data of the password code memory 107 are stored in the password code memory 108. With the stored initial value serving as an origin, the receiving counter 104 (20 bits) initiates the binary-base time measurement by employing the ten-second signals. This setting results in a 44-bit ID code including 20-bit timer information together with a total of 6-digit 24-bit information of the fixed code memory 106 and the password code memory 108. Because of this setting process, the timer information of the electric lock 70 is equalized to the timer information of the wrist watch 69. The same effects can be exhibited as in the initial value setting method in which the timer information of the receiver 33 is equalized to the timer information of the transmitter 32 by simultaneously turning ON the reset switches 34 and 38 of FIG. 2(a) in the foregoing second embodiment. As illustrated in FIG. 3(d), it is possible to register the ID codes of n wrist watches by having n ID codes (a set of receiving counter, fixed code memory and password code me mory), whereby a number of n specified users is permitted to use them. In connection with the usage of the ten keys 0 to 9 of the keyboard 85 of the electric lock 70, the code setting with respect to the electric lock 70 is practicable by inputting of other password numbers of, e.g., 4 digits, than the previous password code. This mechanism is capable of prohibiting illegal code setting of any third party who does not know the 4-digit password code. The code setting of the wrist watch 69 and the electric lock 70 is thus completed.

Now a method of actually locking and unlocking the electric lock 70 by use of the wrist watch 69 will be explained. The user inputs the previously set 3-digit password code from the keyboard 75 of the wrist watch 69, and the password code is thereby stored in the password code memory 107. On pushing the function key C, the data which have previously been set in the transmitting counter 103 and fixed code memory 105 and the data which are now stored in the password code memory 107 are all ciphered in accordance with the cipher table of the ROM 77. Then, the order of data sets is changed, and the data are stored in the transmitting memory 109. Subsequently, the data are transmitted by the infrared light emitting diode 79. This infrared light emitting diode is provided inwardly of the wrist watch 69 and has to be directed to the light receiving unit 80 disposed on the surface of the electric lock 70 depicted in FIG.

3(c). The data of the transmitting memory 109, when received by the light receiving unit 80 are stored in the receiving memory 110. The thus stored data are then deciphered on the basis of a cipher table of ROM 87, and the order of data sets is rearranged. Then a comparative judgement is made as to whether or not the data coincide with any one of previously registered ID codes 1 to n. If the data coincide therewith, transistor 88 is turned ON, and lock rod 90 is moved by driving electromagnetic solenoid 89, thus executing locking and unlocking processes.

The LCD display units 72 and 82 do not only serve to simply indicate the present hour to the user but also serve as outputting means of timer information of the respective timer unit. In addition, the LCD display units 72 and 82 perform a function to keep the transmitting counter 103 and the receiving counter 104 so as to have the same timer information. More specifically, if a difference between those pieces of timer information is produced due to an inaccuracy of a crystal vibrator or variations in temperature, the difference also appears on the LCD display units 72 and 82 indicating the present hour. If such difference is realized it will be feasible to modify the hour by using function keys A, B, A' and B' of the keyboards 75 and 85. At this time, the same amount of hour-modification is simultaneously effected on the transmitting counter 103 and receiving counters 104 as well as on the display clock counters 101 and 102, thereby constantly providing the identical timer information. Namely, the display unit 72 is corrected by the function keys A and B and the display unit 82 is corrected by the function keys A' and B'. Where the difference between pieces of timer information is created, the electric lock 70 equipped with a buzzer 91 as an alarm device gives an alarm to inform the user of the necessity for modifying the hour, if a timer difference between the timer information of the transmitting counter 103 and that of the receiving counter 104 is, e.g., 3 minutes or more. Hence, the predetermined reference time value described in the first embodiment can be reduced to, e.g., approximately 5 minutes. The time for which a copy remote controller can be used illegally is reduced to several minutes, thereby improving the security. When the reference time value is set to 5 minutes, 5 bits of 20 bits of the transmitting counter 103 are within 5 minutes, and the remaining 15 bits are permitted to be used as an ID code. The combinations thereof are added up to 32,768 ($= 2^{15}$) bit patterns. There are 32,768 million patterns of combinations when adding $10^3$ combinations of the fixed code memory 105 and $10^3$ combinations of the password code memory 107. Therefore, the probability of two wrist watches (keys) having the same code is nearly zero, whereby the security is remarkably improved.

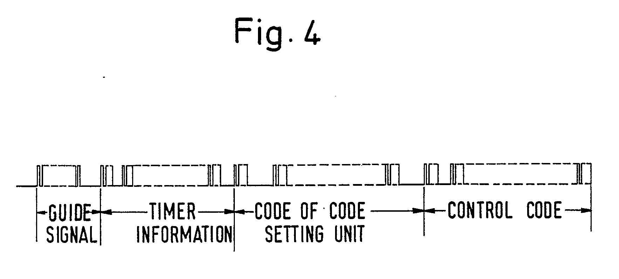

The description has been given by exemplifying the remote control transmitter of a wrist watch type and the remote control receiver incorporated in an electric lock case. The remote control transmitting/receiving system according to the present invention yields the same effects when taking other configurations and constitutions than the above. In the case of the remote control key and lock devices, the remote control transmitter may be incorporated in, e.g., a card key holder, pendant or the like, while the remote control receiver may be embedded into a door, attached to a wall or incorporated in an interphone. The foregoing description mentions the use of a 32,768 kHz crystal vibrator for measuring the time and a 456 kHz ceramic vibrator for the microcomputer clock in combination with the remote control transmitter and receiver. Instead of the 456 kHz ceramic vibrator, only the 32,768 kHz crystal vibrator may function as clocks of the microcomputers 73 and 83, resulting in less consumption of electric power. In the embodiments, remote control key and lock devices are explained. However, as depicted in FIG. 4, the control code is added in series to the ID code including the timer information and the code of the code setting device. When the timer information and the code of the code setting device are provided in the transmitter and coincide with those which are provided in receiver control can be effected. This makes a wide variety of devices applicable. For example, in the case of a TV set, if a channel selection code is allocated to the control code shown in FIG. 4, it follows that no third party can pick up the channel (channel of VTR on which, for instance, enterprise secrets are videotaped) that others are prohibited from watching. Hence, the present invention exhibits the effectiveness in a case where a switch that a third party is prohibited from using is replaced by the remote control device in home electric products like TV sets, VTRs or the like, electronic appliances such as computers, word processors or the like and machineries or measuring instruments provided in factories. Besides, the present invention provides effects in the remote control transmitting/receiving system that should absolutely not be copied by others. Where the control code depicted in FIG. 4 is arranged to be communication data, there are also yielded effects as means for surely delivering and receiving the ID code and means for preventing radio interference in the remote control transmitting and receiving devices such as a cordless telephone, a device for preventing a thing from being left, a pocket bell and automobile telephone. In the description given above, infrared light is employed as a signal medium. The signal medium may, however, involve the use of visible light, an acoustic wave, an electromagnetic wave, a voltage, an electric current and so forth. Any kind of signal medium can likewise provide the explained effects.

## Claims

1. A remote control transmitting/receiving system having a remote control transmitter (1) for transmitting control signals each constituted by modulating a signal medium such as light, an acoustic wave, an electromagnetic wave, a voltage and an electric current, and a remote control receiver (2) for receiving said control signals, characterized in that: said remote control transmitter and receiver (1, 2) each have a timer (5, 13); at least part of said control signals is a timer information generated from said timer of said remote control transmitter (1); and said remote control receiver has a comparator for comparing the timer information of said control signals with the timer information of the timer (13) of the remote control receiver, to control the remote control receiver when the compared pieces of timer information coincide.

2. A system as set forth in Claim 1, wherein said remote control receiver (2) can be controlled when the difference between the timer information of the timer (5) of the remote control transmitter (1) and the timer information of the timer (13) of the remote control receiver (2) is below a predetermined first reference value.

3. A system as set forth in Claim 2, further comprising means for giving an alarm when the difference between said pieces of timer information comes to a predetermined second reference value lower than said first reference value.

4. A system as set forth in any of the preceding Claims, wherein any one or both of said remote control transmitter (69) and said remote control receiver (70) includes means (72, 82) for outputting said timer information of said timer and means for varying said timer information of said timer.

5. A system as set forth in any of the preceding Claims, wherein said remote control transmitter (69) is incorporated into a clock body, provided with a crystal vibrator (81) generating a fundamental oscillating frequency of a clock circuit and a fundamental oscillating frequency for modulating said signal medium.

6. A system as set forth in any of the preceding Claims, wherein said remote control transmitter (1) and said remote control receiver (2) include code setting means (23, 28) for setting a fixed code which is not changed with the lapse of time, and when the timer information and the code set by said code setting means on the transmitter side coincide with those on the receiver side, said remote control receiver can be controlled.

7. A system as set forth in any of the preceding Claims, wherein said remote control transmitter (69) and said remote control receiver (70) include means for setting an initial value into said timer.

8. A system as set forth in Claim 7, wherein said means for setting said initial value into the timer of said remote control transmitter (69) is means which is automatically actuated when inputting a power source, whereas said means for setting said initial value into the timer of said remote control receiver (70) is inputted by transferring means for transferring the timer information from the remote control transmitter, wherein said transferring means is allowed to function only when inputting predetermined password numbers.

9. A system as set forth in Claim 6 and 8, wherein said fixed code set by the code setting means (23) of the remote control transmitter (32) is inputted by said transferring means to said remote control receiver (33).

10. A system as set forth in any of the preceding Claims, wherein the control signals of the remote control transmitter (32, 69) are ciphered by ciphering means (21, 77), and in the remote control receiver (33, 70) the ciphered control signals are deciphered by deciphering means (30, 87).

11. A system as set forth in any of the preceding Claims, wherein the remote control receiver (32, 69) is capable of transferring and inputting plural pieces of timer information.

12. A system as set forth in Claim 11, wherein said remote control receiver is capable of transferring and inputting a plurality of fixed codes.

13. A system as set forth in any of the preceding Claims, wherein the timers (30, 31) of said remote control transmitter (32) and remote control receiver (33) function at 100 kHz or less.

# Fig.1(a)

# Fig.1(b)

# Fig. 1 (c)

```
         ┌──────────────┐ 120
         │ RECEIVE INPUT│
         │   DATA Dd    │
         └──────┬───────┘
                │
         ┌──────▼───────┐ 121
         │   DECODE     │
         │  INPUT DATA  │
         └──────┬───────┘
                │
         ┌──────▼───────┐ 122
         │  INPUT TIMER │
         │   DATA De    │
         └──────┬───────┘
                │
         ┌──────▼───────┐ 123
         │ SUBTRACT De  │
         │FROM DECODED Dd│
         └──────┬───────┘
                │
             ╱──▼──╲  124
            ╱DIFFERENCE╲     NO
           ╱  <2x 10   ╲──────────►
            ╲         ╱
             ╲───┬───╱
              YES │   125
         ┌────────▼─────┐
         │   ACTUATE    │
         │ DRIVER UNIT  │
         └──────────────┘
```

## Fig.2 (a)

## Fig.2 (b)

| HOUR DIGIT | | CIPHER CODE | | TEN MINUTES DIGIT | | CIPHER CODE | |
|---|---|---|---|---|---|---|---|
| 0 | 0 | 9 | 1 | 0 | 0 | 3 | 4 |
| 0 | 1 | 5 | 7 | 0 | 1 | 5 | 8 |
| 2 | 2 | 3 | 4 | 5 | 8 | 2 | 9 |
| 2 | 3 | 8 | 6 | 5 | 9 | 1 | 6 |

## Fig.2(c)

GUIDE SIGNAL — TIMER INFORMATION — CODE OF CODE SETTING UNIT

# Fig. 3(a)

## Fig. 3 (b)

## Fig. 3 (c)

## Fig. 3 (d)

# Fig. 4

| GUIDE SIGNAL | TIMER INFORMATION | CODE OF CODE SETTING UNIT | CONTROL CODE |

# Fig. 5 (a)

# Fig. 5 (b)